Europäisches Patentamt

European Patent Office

Office européen des brevets

(11) Veröffentlichungsnummer: **0 165 952 B1**

# EUROPÄISCHE PATENTSCHRIFT
## veröffentlicht nach Art. 158 Abs. 3 EPÜ

(45) Veröffentlichungstag der Patentschrift: 27.03.91

(51) Int. Cl.⁵: **B28B 1/26, C08J 9/28**

(21) Anmeldenummer: 85900061.4

(22) Anmeldetag: **11.12.84**

(86) Internationale Anmeldenummer:
**PCT/DE84/00271**

(87) Internationale Veröffentlichungsnummer:
**WO 85/02578 (20.06.85 85/14)**

(54) **FORMGEBUNG KERAMISCHER WERKSTOFFE.**

(30) Priorität: 14.12.83 DE 3345188
            14.03.84 DE 3409278

(43) Veröffentlichungstag der Anmeldung:
**02.01.86 Patentblatt 86/01**

(45) Bekanntmachung des Hinweises auf die
Patenterteilung:
**27.03.91 Patentblatt 91/13**

(84) Benannte Vertragsstaaten:
**AT BE CH DE FR GB LI LU NL SE**

(56) Entgegenhaltungen:
CH-A- 262 734        DE-A- 1 584 738
DE-A- 1 808 391     DE-A- 2 301 851
DE-B- 1 771 643      US-A- 3 929 685

(73) Patentinhaber: **SACMI IMOLA, COOPERATIVA MECCANICI IMOLA Srl
Via Selice Provinciale 17/A
Imola(IT)**

(72) Erfinder: **Will, Günther
Zimmerstrasse 1
W-6100 Darmstadt(DE)**

(74) Vertreter: **Patentanwälte Beetz sen. - Beetz jun. Timpe - Siegfried - Schmitt-Fumian- Mayr
Steinsdorfstrasse 10
W-8000 München 22(DE)**

## Beschreibung

Die Erfindung betrifft die Verwendung poröser Formwerkstoffe auf der Basis eines porösen, offenporigen Kunststoffmaterials anstelle von Gips zur Herstellung von Formen zur Erzeugung keramischer Rohlinge aus wasserhaltigen, gießbaren Formmassen.

Zur Formgebung keramischer Werkstoffe werden bisher Formen aus Gips verwendet, der zur Herstellung von Gieß-, Dreh- oder Preßformen mit unterschiedlichen Wassermengen angesetzt wird. Die Formen überstehen je nach Beanspruchung, Porenvolumen, Oberflächengüte und Art der Verwendung 50 bis einige Hundert Abformungen. Neben der einfachen Verarbeitung, den niedrigen Materialkosten und der Vielseitigkeit in seiner Verwendung für Gieß-, Dreh- und Preßformen hat Gips die vorteilhafte Eigenschaft, in Kontakt mit gießfähigen, keramischen Massen durch Absorption des enthaltenen Wassers einen Scherben zu bilden, der pro mm Dicke etwa 1 bis 30 Minuten benötigt und sich nach weiterer Trocknung von der Form löst.

Von Nachteil sind die durch die begrenzte Anzahl der Abformungen beschränkte Gebrauchsfähigkeit und das hohe Gewicht der Formen, was sich insbesondere bei großen Formteilen nachteilig auswirkt. Nachteilig ist auch die oft rasche Ablösung des noch plastischen Scherbens von der Form. Seit langem wird daher nach Ersatzmöglichkeiten für Gips als Formmaterial gesucht.

Lediglich mit dem Druckguß, einer ca. 20 Jahre bekannten Methode, bei der die Scherbenbildung in geschlossener Form durch hohen Schlickerdruck bewirkt wird, war es möglich, auf die Verwendung von Gips als Formmaterial zu verzichten.

Zur Herstellung von Druckguß-, Dreh- und Preßformen sind eine Reihe Verfahren bekannt, um aus porösen Feststoffen bestehende Formen herzustellen. So werden z.B. härtbaren Harz-Formmassen wasserlösliche Salze zugemischt, die nach Aushärtung herausgelöst werden, oder plastifizierbare Kunststoffe, wie z.B. Polymethylmethacrylat und Polyethylen, werden in feinkörniger Form unter Wärmeeinwirkung verpreßt, ähnlich der Herstellung von porösen Metallformteilen durch Sintern feinkörniger Pulver. Nach anderen Verfahren wird die Porosität durch Verpressen von anorganischen, feinkörnigen Pulvern, beispielsweise Quarz, unter geringem Zusatz von Harz als Binder erreicht. Schließlich wurde auch die Verwendung von Formmassen aus porösem Calciumsilicathydrat, das mit grobkörnigem Gips gemischt im Autoklaven ausgehärtet wird, beschrieben. Diese Methoden haben den Nachteil, daß die Formherstellung aufwendig und kompliziert ist.

Aus DE-Al-19 28 026 ist ein Verfahren bekannt, bei dem zur Herstellung von porösen Feststoffen eine aushärtbare, Wasser enthaltende Gießmasse aus flüssigen, mit Wasser emulgierbaren Monomeren und in Wasser unlöslichen, jedoch in den Monomeren wenigstens quellbaren, pulverförmigen Polymeren nach Formgebung durch Gießen ausgehärtet wird. Mit den nach diesen Verfahren hergestellten porösen Formen war es möglich, im Druckguß einige Tausend Abformungen mit einem Schlickerdruck von 10 bis 50 bar zu erhalten.

In DE-Al-23 01 851 ist ein Verfahren zur Herstellung von sandwichartigen Formteilen mit Zellstruktur beschrieben, das auf der Polymerisation von W/O-Emulsionen mit flüssigen polymerisierbaren Monomeren unter Einstellung eines bestimmten Dispersionsgrades beruht und bei dem Formteile resultieren, die eine porenfreie Oberflächenschicht und im Inneren eine grob- bis feinzellige Struktur aufweisen. Eine Verwendbarkeit dieser Materialien als Formwerkstoffe zur Herstellung keramischer Scherben ist in dieser Druckschrift nicht angegeben. Derartige Werkstoffe sind auch für eine Scherbenbildung aus keramischen Rohstoffen ungeeignet.

Aus US-A-39 29 685 ist ein Verfahren zur Herstellung von Formwerkstoffen zur Verwendung in der Keramikindustrie bekannt, bei dem eine W/O-Emulsion mit einer Ölphase aus flüssigen Monomeren polymerisiert wird, der feste Polymerpartikel mit katalysatorbeschichteter Oberfläche zugesetzt werden. Die nach diesem Verfahren erhältlichen porösen, offenporigen Formwerkstoffe besitzen zwar eine hohe Permeabilität für Wasser, da ihre Porengröße im Bereich von 1 bis 20 um liegt, führen jedoch zu einer Scherbenbildung nur unter Anwendung eines Drucks im Bereich von 20 bis 30 bar. Gleiches gilt auch für die in DE-Al-18 08 391 angegebenen Formwerkstoffe, die zur Herstellung von Preß- und Druckformen zur Abformung keramischer Rohlinge vorgesehen sind, ohne daß in dieser Druckschrift nähere Angaben zum Dispersionsgrad der Emulsionen gemacht sind.

Wie oben erläutert, sind die nach den bekannten Verfahren hergestellten Formwerkstoffe auf Kunststoffbasis zur drucklosen Abformung keramischer Werkstoffe ungeeignet. Die für Gips typische drucklose Scherbenbildung mit keramischem Schlicker war nicht möglich und wurde auch für nicht erreichbar gehalten. Gips blieb daher bis heute das fast ausschließlich verwendete Formenmaterial zur Abformung keramischer Werkstoffe nach Gieß-, Dreh- und Preßverfahren.

Der Erfindung liegt die Aufgabe zugrunde, die Verwendung spezieller poröser Formwerkstoffe zur Herstellung keramischer Scherben anzugeben, die anstelle von Gips insbesondere für die drucklose Scherbenbildung eingesetzt werden können. Dabei sollen Formwerkstoffe verwendet werden, die scherbenbildende Eigenschaften wie Gips besitzen, der Beanspruchung durch Feuchtigkeits- und Temperaturwechsel, durch Druck und Abrieb besser widerstehen und die konstruktive Gestaltung von Formen erleichtern. Zugleich soll die Verwendbarkeit des gleichen Materials als Gieß-, Dreh-, Preß- und Druckgußform wie bei der Verarbeitung von Gips bei der Herstellung der Arbeitsformen in offenem oder geschlossenem Guß gewährleistet sein.

Die Aufgabe wird gemäß Anspruch 1 gelöst. Die abhängigen Ansprüche betreffen vorteilhafte Ausführungsformen der Erfindung.

Erfindungsgegenstand ist die Verwendung von porösen, offenporigen, wasserabsorbierenden gehärteten Formwerkstoffen aus Kunststoff anstelle von Gips mit einem mit Wasser auffüllbaren Porenvolumen von mindestens 10 %, die eine solche kapillare Saugkraft besitzen, daß im Kontakt mit einer flüssigen keramischen Formmasse mit einem Wassergehalt von etwa 25 bis 30 Volum-% bereits drucklos ein vom Formwerkstoff abnehmbarer Scherben gebildet wird, und die hergestellt sind durch

(A) Herstellung einer Wasser-in-Öl-Emulsion mit einer Ölphase aus einem oder mehreren flüssigen polymerisierbaren Monomeren unter Verwendung von Emulgatoren und eines dem angestrebten Porenvolumen entsprechenden Wassergehalts;

(B) Erhöhung des Dispersionsgrades der Wasserphase der Wasser-in-Öl-Emulsion durch Mischen unter Einstellung der Viskosität auf einen Wert im Bereich von 1600 bis 5000 cP,

(C) Polymerisation der Ölphase der Wasser-in-Öl-Emulsion in Gegenwart eines Polymerisationsinitiators in einer Form

und gegebenenfalls

(D) Entfernen des Wassers aus dem erhaltenen Formwerkstoff, zur Herstellung keramischer Scherben, wobei die Scherbenbildungsgeschwindigkeit umso höher ist, je höher die bei der Herstellung des Formwerkstoffs in Schritt B eingestellte Viskosität der Emulsion war.

Die Herstellung keramischer Rohlinge aus wasserhaltigen, gießbaren keramischen Formmassen besteht z.B. im Eingiessen der Formmasse in eine Form aus dem erfindungsgemäß verwendeten Formwerkstoff, dem Entleeren der Form nach Erreichen der gewünschten Scherbenstärke sowie der Entnahme des Rohlings aus der Form.

Eine vorteilhafte verarbeitungsfähige Zusammensetzung zur Herstellung des Formwerkstoffs besteht aus

(I) einem Styrol enthaltenden Polyestergießharz, das neben Styrol copolymerisierbare Acrylate und/ oder Methacrylate enthält, oder einem flüssigen Präpolymerisat aus überwiegend Methylmethacrylat;

(II) zur Bildung einer W/O-Emulsion erforderlichen Emulgatoren und ggfs. grenzflächenaktiven Stoffen und

(III) Calciumsulfatdihydrat, Natriumdisilicat und/oder Dinatriumtetraborat in einer Menge von 2 bis 12 Masse-%, bezogen auf die Masse von Komponente I.

Die Erfindung bringt unter anderem die großen Vorteile mit sich, daß für Gießverfahren die Füllstandzeiten der Formen und die Trocknung erheblich verkürzt, die Anzahl aufeinanderfolgender Abformungen vervielfacht, die Ablösung des Scherbens von der Form eingestellt und der Energie- und Formenaufwand auf ein Minimum reduziert werden können. Darüber hinaus ermöglicht die Erfindung, das Druckgußverfahren, bei dem bisher Drücke von 10 bis 50 bar angewandt werden mußten, bei wesentlich niedrigeren Drücken durchzuführen, so daß mit einem sehr geringen Form- und Maschinenaufwand und einem Bruchteil der Formstandzeit konventioneller Druckgußverfahren auszukommen ist.

Die kapillare Saugkraft des Formwerkstoffs ist derart, daß bei Kontakt einer entsprechenden Formwand mit einer flüssigen keramischen Masse mit üblichem Wassergehalt von ca. 25 bis 35 Vol.-% die suspendierten Feststoffe angesaugt und verfestigt werden und damit wie mit Gips ein von der Form abnehmbarer Scherben in einem darüber hinaus über die Art des Formwerkstoffs einstellbaren Zeitbereich gebildet wird.

Die Füllstand und Trockenzeit des Formlings und damit auch die Formstandzeit können nach der Erfindung durch Einbringen zusätzlicher Verbindungen in die Emulsion zur Herstellung des porösen Formwerkstoffs erheblich verkürzt werden, da mit solchen Formwerkstoffen die. Scherbenbildung und Entwässerung schneller ablaufen.

Derartige Zusätze sind Calciumsulfatdihydrat, Natriumdisilicat und Dinatriumtetraborat.

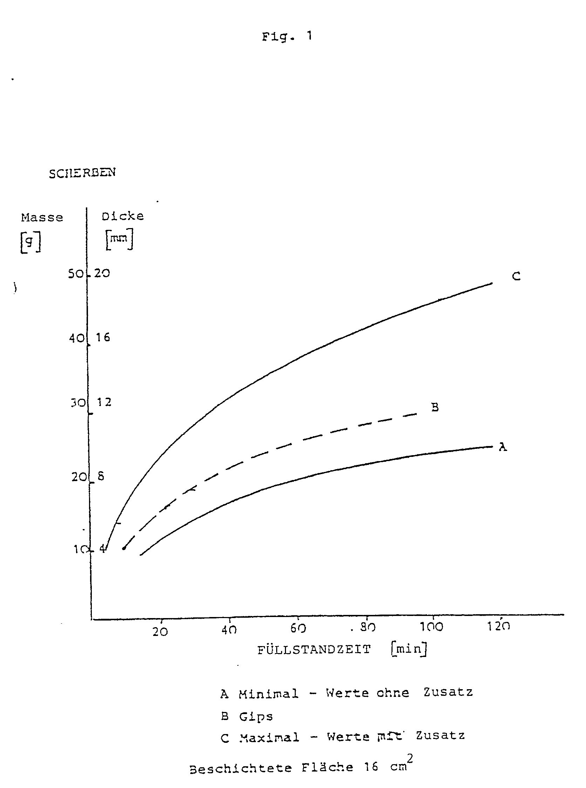

Die Geschwindigkeit der Scherbenbildung läßt sich über die Menge dieser Zusätze in einem gewünschten Zeitbereich einstellen. Die unterschiedliche Scherbenbildung mit erfindungsgemäß verwendeten Formwerkstoffen, die ohne bzw. mit diesen Zusätzen hergestellt wurden, im Vergleich mit Gips ist in Figur 1 dargestellt, die sich auf die Scherbenbildung von Porzellanschlicker bezieht. Der graphische Vergleich zeigt eindeutig die nach der Erfindung erreichte Einstellungsbreite und insbesondere die mit den Zusätzen

EP 0 165 952 B1

erreichte Überlegenheit gegenüber Gips als Formwerkstoff. Die Füllstand und Trocknungszeiten lassen sich infolge der rascheren Entwässerung in der Form auf 20 bis 33 % der bei konventionellem Guß in Gipsformen erforderlichen Zeiten reduzieren.

Eine Verkürzung der gesamten Formstandzeit wird dadurch erreicht, daß der in der Form befindliche Schlicker z.B. durch entsprechende Füllhöhe oder mit Hilfe von Preßluft unter Druck gesetzt wird. Im Gegensatz zu dem bekannten Druckgußverfahren, bei dem Drücke zwischen 10 und 50 bar erforderlich sind, genügt es bei den erfindungsgemäß verwendeten Formwerkstoffen auf den in der Form befindlichen Schlicker, je nach gewünschter Scherbenstärke und Füllstandzeit, kurzzeitig einen Druck von 0,1 bis etwa 5 bar auszuüben.

Mit einem Sanitärschlicker wird eine Scherbendicke von 4 bis 8 mm innerhalb von 5 bis 10 Minuten mit einem Schlikkerdruck von nur 0,75 bar erhalten. Die normale Füllstandzeit für diese Schlicker beträgt in der Gipsform 65 bis 75 Minuten, die Formstandzeit 230 Minuten. Gemäß der Erfindung sind Formstandzeiten zwischen 12 und 25 Minuten für Scherben der genannten Dicke erreichbar.

Die Gießformen können dazu mit geringfügigen Änderungen versehen sein, wie Schließvorrichtungen zur Abdichtung der Form und einem über dem Schlickerspiegel liegenden Abfüllstutzen, der mit einem verschließbaren Luftraum zur Aufnahme der Preßluft versehen ist. Die erfindungsgemäß hergestellte Gießform sollte auf ein Porenvolumen zwischen 30 und 60 % eingestellt werden. Derartige Gießformen können auch als Druckformen verwendet werden.

Um den Preßdruck zu ersetzen oder zu unterstützen, kann die Gießform in einem geschlossenen Behältnis gelagert und von außen evakuiert werden.

Die vorgenannten Formstandzeiten gelten z.B. für Steingutoder sanitärkeramischen Schlicker. Bei Porzellanschlicker sind die Füll- und Formstandzeiten noch erheblich kürzer. Der beim bekannten Druckgußverfahren erforderliche hohe Aufwand für Maschinen und Druckgußformen entfällt gemäß der Erfindung. Es können nach diesem Verfahren Voll- und Hohlguß, gegebenenfalls auch kombiniert, durchgeführt werden.

Eine weitere Maßnahme nach der Erfindung zur Formgebung keramischer Massen betrifft die Regulierung der Ablösung des Formlings aus der Kunststofform.

Bei Gipsformen tritt nach mehreren Abgüssen durch den erhöhten Wassergehalt in der Form die Tendenz zum vorzeitigen Ablösen des Formlings auf. Der Feuchtigkeitsentzug wird dadurch unterbunden und die Gefahr des Verzugs, insbesondere von planen Flächen des Formlings erhöht . Die nach der Erfindung verwendeten Kunststofformen führen zur Haftung des Formlings bis zur weitgehenden Entwässerung. Dies kann durch Belüftung des Scherbens mit warmer Luft beschleunigt und der Zeitpunkt der Ablösung des Scherbens von der Form durch Temperatur und Einwirkungszeit eingestellt werden. Nachdem damit jedoch auch eine unter Umständen ungleichmäßige Trocknung von der Belüftungsseite her verbunden ist, wurde versucht, die Ablösung des Scherbens zu beschleunigen. Während die üblichen Methoden mit Gleitmittel, wie Talkum und Stearate, zu Ablagerungen und verzögerter Scherbenbildung führten, brachte eine Maßnahme nach der Erfindung ein optimales Ergebnis: Vor dem Einbringen des Schlickers in die Form wird diese mit einem Gipsspray kurz abgesprüht. Dazu wird Gips-Dihydrat in 1 bis 10 %-iger Suspension verwendet. Die Scherbenbildungszeit wird in keiner Weise dadurch verändert, die vorhandenen, sehr geringen Gipsspuren auf dem Formling bleiben auf die weitere Behandlung ohne Einfluß. Diesem Trennspray können, wenn erforderlich, in geringem Umfang Gleitmittel zugesetzt werden.

Ablagerungen und Rückstände auf der Form lassen sich mit warmem Wasser und einem handelsüblichen Netzmittel leicht beseitigen.

Die Gipssuspension wird durch Einmischen von Stuck- oder Formgips in Wasser (10 Masse-%) angesetzt; das Gemisch wird ca. eine Stunde gerührt und ist dann gebrauchsfertig.

Von Vorteil ist die kombinierte Anwendung des Trennsprays mit einer kurzzeitigen Temperaturbehandlung zur Lösung des Scherbens von der Form. Die erhöhte Temperatur kann durch Wärmestrahlung oder Warmluft erzeugt werden. Für 3 bis 5 mm dicke Scherben genügen meistens 1 bis 3 Minuten Warmluft von ca. 50 °C zur Ablösung.

Diese Methodik kann auch bei der Anwendung des Niederdruckverfahrens eingesetzt werden. Nach Ausbildung des Scherbens wird abgegossen und die Form nochmals mit Preßluft unter Druck gesetzt und anschließend zur Ablösung des Scherbens mit Wärme behandelt. Mit diesen Maßnahmen kann die Trocknungszeit des Scherbens in der Form und damit die Formstandzeit auf wenige Minuten reduziert werden. Die Wärmebehandlung des Scherbens kann durch Wärmestrahlung oder Warmluft vorgenommen werden. Zur Ablösung von Vollgußteilen genügt die Verwendung des oben angeführten Trennsprays.

Das Porenvolumen der Formwerkstoffe wird mit der Wassermenge in der Emulsion eingestellt. Die Poren müssen überwiegend offen sein und mit Wasser auffüllbar.

Für die Anwendung im drucklosen Gießen werden Porenvolumina zwischen 45 und 60 % bevorzugt.

4

EP 0 165 952 B1

Die Formen sind keiner wesentlichen Oberflächenbeanspruchung ausgesetzt, und die bei Gips eintretenden Veränderungen, wie Aufweichungen und Abbau der Oberfläche durch Feuchtigkeit, schwache Säuren und Alkalien oder Polyphosphate, haben auf die Kunststofformen keinen oder nur einen äußerst geringen Einfluß.

Höhere Druck- und Abriebfestigkeiten sind bei der Verwendung der Formwerkstoffe für Dreh-, Druck- und Preßformen notwendig. Durch Herstellung von Emulsionen mit niedrigerem Wassergehalt zwischen 20 und 45 % wird dies ohne weiteres erreicht. Das Porenvolumen läßt sich auch durch Füllstoffe, wie Mikroglaskugeln, Schwerspat, Quarzmehl und andere Füllstoffe oder pulverförmige Polymere reduzieren und die mechanische Festigkeit anheben. Die Permeabilität des Formwerkstoffs für Gase und Flüssigkeiten kann dadurch, insbesondere bei Zugabe von Netzmitteln zur Emulsion, wie sie später angeführt sind, in Mengen von 0,05 bis etwa 1 %, bezogen auf den härtbaren Anteil, reguliert werden. Allerdings wird damit unter Umständen die Scherbenbildung beeinträchtigt, auf die auch bei den Dreh-, Preß- und Niederdruckverfahren nicht verzichtet werden kann.

Je nach Einstellung der Formen und der angewandten Verfahrensweise, wie druckloses Gießen, Niederdruckgußverfahren, Drehen und Pressen, erreichen die nach der Erfindung verwendeten Formen ein Mehrfaches der Lebensdauer von Gipsformen unter gleichen Bedingungen. Beispielsweise zeigen Drehformen nach 500 Abformungen auf den Oberflächen noch keinerlei Veränderungen.

Verdichtungen der Oberfläche können, wenn diese gewünscht werden, durch Aufbringen von wässerigen Kunstharzlösungen, z.B. mit Melamin-Harnstoff-Formaldehydharzen, Epoxidharzen oder filmbildenden Kunststoffdispersionen, erhalten werden.

Die Formen können skelettiert in Teilen auch mit Gipsformteilen kombiniert werden. Die Formwerkstoffe lassen sich wie Holz bearbeiten, kleben, beschichten, verschrauben, fräsen und abdrehen und mit üblichen bekannten Mitteln wie Glasfasern, Textilfasern und Metallteilen armieren.

Das Verfahren zur Herstellung von Formwerkstoffen aus Wasser-in-Öl-Emulsionen, die als Ölphase polymerisierbare bzw. härtbare mit Wasser emulgierbare Verbindungen enthalten, ist als solches bekannt.

In DE-A-22 56 496 (vgl. Spalten 2 bis 8) sind die Voraussetzungen und Bestandteile härtbarer bzw. polymerisierbarer Wasser-in-Öl-Emulsionen sowie ihre Einstellung beschrieben; ferner ist auf die Veränderungen, die durch Einstellen des Dispersionsgrades einer Emulsion in dem ausgehärteten Produkt hervorgerufen werden, hingewiesen. Dazu sind auch Emulgatoren, die zu offenporösen Systemen führen, Katalysatoren und Beschleuniger genannt.

Obwohl diese Verfahren bekannt waren, war es bis dahin nicht gelungen, ein scherbenbildendes, zur Formgebung keramischer Werkstoffe geeignetes Kunststoffmaterial herzustellen.

Zu einem überraschenden Ergebnis führten daher eingehendere Untersuchungen von porösen Materialproben, die nach dem bekannten Verfahren hergestellt waren, auf ihre Verhalten bei Überschichtung mit einem Porzellanschlicker. Entgegen der Auffassung, daß die hydrophoben Kunststoffe gegenüber wässerigen Medien keine Kapillaraktivität entfalten können, fanden sich einige wenige Proben, die innerhalb weniger Minuten ähnlich wie Gips einen nach Trocknung abnehmbaren Scherben bildeten. Auffallenderweise war die Kapillaraktivität gegenüber Wasser bei diesen Proben gleicher Rezeptur geringer und betrug etwa 20 % der kapillaren Saugfähigkeit anderer Proben mit einer Steigfähigkeit von 20 cm Wassersäule in 15 Minuten am senkrecht im Wasser stehenden Profil. Diese waren jedoch zur Bildung eines Scherbens nicht in der Lage. Es war daher anzunehmen, daß die Kapillaraktivität eines porösen Körpers alleine für die Scherbenbildung nicht ausschlaggebend ist, sondern auch der Aufbau der Materialstruktur eine Rolle spielt. Die Fähigkeit, Scherben zu bilden, steigerte sich bei den Proben, die mit einer Emulsion höherer Viskosität hergestellt waren und einen weit überwiegenden Anteil offener Poren am Gesamtporenvolumen besaßen.

Zur Erzeugung einer für die Scherbenbildung effektiven Saugwirkung muß daher die Emulsion in einem den gewünschten Eigenschaften entsprechenden Dispersionsbereich eingestellt werden, der sich jedoch je nach Art der in der Ölphase enthaltenen polymerisierbaren bzw. härtbaren Flüssigkeiten und evtl. Zusätzen verändern kann.

Um reproduzierbare Ergebnisse zu erhalten, wird am einfachsten unmittelbar die Scherbenbildung, die an einem ausgehärteten Formwerkstoff ermittelt ist, als Kenngrösse zur Einstellung des Dispersionsgrades der Emulsion herangezogen. In den Beispielen 1 und 2 (vgl. Tabelle 3) ist an Orientierungsversuchen gezeigt, wie sich die Scherbenbildung mit steigender Viskosität der Emulsion im Vergleich zu Gips verändert.

Diese Einstellung verliert jedoch bei Verwendung der die Scherbenbildung beschleunigenden, bereits erwähnten Zusätze an Bedeutung. Offensichtlich sind diese für die Änderung der Feinstruktur des Materials, das die Scherbenbildung begünstigt, von ausschlaggebender Bedeutung.

Zur Herstellung der nach der Erfindung verwendeten Formwerkstoffe werden z.B. vorteilhaft als härtbare Anteile der Emulsion verwendet:

5

Polyesterharze (A) aus mehrbasigen Carbonsäuren wie Maleinsäure, Fumarsäure, Itaconsäure oder deren Anhydriden, Adipinsäure, Sebacinsäure, Phthalsäure, Isophthalsäure und Terephthalsäure, und mehrwertigen Alkoholen wie Ethylenglycol, 1,3-Butylenglycol, 1,2-Propylenglycol, Neopentylglycol und dergleichen Diole. Die Harze sind in den zur Vernetzung bzw. Copolymerisation geeigneten Monomeren (B) gelöst. Der Harzanteil in der Lösung beträgt 40 bis 70 Masse-%.

Als Monomere (B) eignen sich z.B. Styrol, α-Methylstyrol, Phtalsäureallylester, Ester der Methacrylsäure und Acrylsäure (letztere z.B. als Weichmacher), insbesondere jedoch Styrol und Methacrylsäuremethylester.

Als Katalysatoren (C I) dienen monomerlösliche Katalysatoren, wie Benzoylperoxid und Lauroylperoxid; zusätzlich können auch in Wasser lösliche Peroxide und als Schnellbeschleuniger (D) z.B. Dimethyl-p-toluidin, Dimethylanilin und Diethylanilin verwendet werden. Als Emulgiermittel (E I) werden Wasser-in-Öl-Emulgatoren eingesetzt; besonders bewährt haben sich für die Herstellung offenporöser Produkte Polyol-Emulgatoren, Blockcopolymere aus Polypropylen und Polyethylenoxid mit wenigstens 30 % hydrophilen Gruppen im Gesamtmolekül, in einer Menge von 0,5 bis etwa 3 Masse-%, bezogen auf die Masse der in der Emulsion enthaltenen härtbaren Bestandteile. Die W/O-Emulgatoren können durch geringe Mengen Detergentien (E 2) bzw. grenzflächenaktive Stoffe, wie z.B. Alkylarylsulfonate, Fettalkoholsulfate, Fettalkohol-Ethylenoxid-Addukte und dgl., die als handelsübliche waschaktive Substanzen bekannt sind, ergänzt werden. Werden pulverförmige Polymere oder Füllstoffe zugesetzt, so können die Detergentien zur Regulierung der Permeabilität für Gase und Flüssigkeiten in geringen Mengen bis ca. 0,5 % der Harzmenge verwendet werden.

Als Zusätze zur Beschleunigung der Scherbenbildung (F) haben sich neben anderen weniger wirksamen Verbindungen wie dem Dihydrat des Calciumsulfats vor allem Natriumdisilicat und Dinatriumtetraborat bewährt, die als alkalisch reagierende, molekular wasserbindende Stoffe bevorzugt werden. Sie erfordern jedoch unterschiedliche Zusatzmengen; zweckmäßig ist es, diese Zusätze auf etwa 2 bis ca. 12 Masse-%, bezogen auf den härtbaren Anteil der Emulsion, zu beschränken. Die für (F) in Frage kommenden Stoffe können auch kombiniert verwendet werden.

Eine zusätzliche Erhöhung der Durchlässigkeit für Flüssigkeiten und Gase, aber auch eine Minderung des Polymerisationsschwundes wird mit pulverförmigen bis feinkörnigen, in der härtbaren bzw. polymerisierbaren Phase quellbaren Polymeren (G) bewirkt, z.B. durch pulverförmige Polymere wie z.B. Polymerisate aus 30 Masse-% ungesättigten Polyestern und 70 Masse-% eines Monomerengemisches aus Styrol und Methacrylsäuremethylester 1:1 oder ein Polymethylmethacrylat (Perlpolymerisat feiner Körnung, Korngröße ca. 0,01 bis 0,2 mm, Molekulargewicht über 250.000, das auch in den Beispielen verwendet ist.

Als Wasser wird Leitungswasser (H) verwendet.

Im folgenden soll beispielhaft das Vorgehen nach der Erfindung erläutert werden.

Dem in den Monomeren (B) gelösten Harz (A) werden Emulgiermittel (E 1, E 2), Katalysator (C) oder Beschleuniger (D) und anschließend die Zusätze (F) und (G), wenn erforderlich, eingemischt, wobei die Reihenfolge geändert werden kann. Darauf wird unter langsamem Rühren das Wasser zugegeben und die Wasser-in-Öl-Emulsion gebildet. Es entsteht je nach Temperatur und Katalysierung nach ca. 15 bis 120 Minuten ein fester, Wasser enthaltender Formwerkstoff, dessen Masse nach Trocknung etwa um den Emulsionswasseranteil ± 2-3 % verringert ist. Das Porenvolumen entspricht etwa der in die Emulsion eingebrachten Wassermenge, die Poren sind überwiegend offen (75 bis 97 % des Gesamtporenvolumens).

TABELLE 1

Kennzeichnung der Komponenten

A Harz   ungesättigter Polyester aus Maleinsäure und Glycolen

B Monomere   B 1) Styrol
B 2) Methacrylsäuremethylester

C Katalysator   Benzoylperoxid 50 %-ig

D Beschleuniger   N-Dimethyl-p-toluidin 10 %-ig

E Emulgator   E 1) WO-Emulgator aus nichtionogenen Polyetherglycolen
E 2) handelsübliche Netzmittel auf
Basis nichtionogener Tenside

F Zusatz zur
Scherbenbildung   F 1) Dinatriumtetraborat
F 2) Natriumdisilicat

G pulverförmiges
Polymerisat   feinkörniges Polymethylmethacrylat (Molekülmasse über 200.000, mittlere Korngröße
20 μm)

H Wasser   Leitungswasser

TABELLE 2

Komponentenzusammensetzung der Beispiele *

| Bei-spiel Nr. | Komponenten | | | | | | | | | | |
|---|---|---|---|---|---|---|---|---|---|---|---|
| | A. | B1 | B2 | C | D | E1 | E2 | F1 | F2 | G | H |
| 1. | 52,0 | 48,0 | – | 2 | 1 | 2 | – | – | – | – | 100 |
| 2 | 52,0 | 28,0 | 20,0 | 2 | 1 | 2 | – | – | – | – | 200 |
| 3 | 52,0 | 28,0 | 20,0 | 2 | 1 | 2 | – | 3 | – | – | 100 |
| 4 | 52,0 | 28,0 | 20,0 | 2 | 1 | 2 | – | 6 | – | – | 100 |
| 5 | 52,0 | 28,0 | 20,0 | 2 | 1 | 2 | – | 8 | – | – | 100 |
| 6 | 52,0 | 28,0 | 20,0 | 2 | 1 | 2 | – | – | 7,5 | – | 100 |
| 7 | 52,0 | 28,0 | 20,0 | 2 | 1 | 2 | – | 6 | 6 | – | 100 |
| 8 | 50,0 | 25,0 | 25,0 | 2 | 1 | 2 | 0,15 | 4 | – | 75,0 | 60,0 |
| 9 | 50,0 | 25,0 | 25,0 | 2 | 1 | 2 | 0,15 | 4 | – | 50,0 | 75,0 |
| 10 | 50,0 | 25,0 | 25,0 | 2 | 1 | 2 | 0,15 | – | – | 75,0 | 60,0 |
| 11 | 50,0 | 25,0 | 25,0 | 2 | 1 | 2 | 0,15 | – | – | 50,0 | 75,0 |

* Die angegebenen Mengen sind Masseteile.

Beispiele 1 und 2

In das Harz, das bereits das Emulgiermittel, den Beschleuniger oder Härter gelöst enthält, wird langsam mit einem Flügelmischer (Drehzahl 300 bis 400 $min^{-1}$) der Wasseranteil eingerührt und die Wasser-in-Öl-Emulsion gebildet. Entsprechend der Rührintensität und Rührzeit nimmt die Viskosität der Emulsion zu. Nach 1, 2 und 5 Minuten werden jeweils Proben entnommen. In Beispiel 1 weisen die Proben eine Viskosität von 2500, 3700 und 4200 cP, in Beispiel 2 eine Viskosität von 1600, 2800 und 5000 cP auf. Nach Zugabe und Einmischen der entsprechenden Härter- bzw. Beschleunigermenge werden die Proben in kleine Plattenformen (Durchmesser 9 cm, Tiefe 12 mm) eingegossen und kalt ausgehärtet. Nach Trocknen und Entfernen des Emulsionswassers werden die Proben feucht abgewischt. Auf die erhaltenen Formwerkstoffe wird jeweils eine geringe Menge eines Porzellanschlickers (Wassergehalt 32 %) aufgebracht. Der Schlicker läuft auf eine Schichtdicke von ca. 2 mm aus. Bei den Proben wird die erforderliche Zeit bis zum Mattwerden der Oberfläche gestoppt. Der gleiche Test wird auf einer kleinen Gipsplatte (RG 1,05) zum Vergleich durchgeführt.

Daraus resultieren die in Tabelle 3 dargestellten Ergebnisse.

EP 0 165 952 B1

TABELLE 3

Proben von Beispiel 1

| Rührzeit (s) | 60 | 150 | 300 |
|---|---|---|---|
| Viskosität (cP) | 2500 | 3700 | 4200 |
| Scherbenbildung (min) | 18 | 15 | 11 |

Proben von Beispiel 2

| Rührzeit (s) | 60 | 150 | 300 |
|---|---|---|---|
| Viskosität (cP) | 1600 | 2800 | 5000 |
| Scherbenbildung (min) | 28 | 18 | 6,5 |

Gips

Scherbenbildung (min): 5,5.

Mit steigender Viskosität verkürzt sich die Scherbenbildungszeit. Sie erreicht nur knapp die Zeit von Gips in Beispiel 2 mit 6,5 Minuten. Deutlich erkennbar ist die inverse Abhängigkeit zwischen Viskosität und Scherbenbildungszeit. Der Viskositätsbereich ändert sich mit Änderung der Zusammensetzung der härtbaren Phase und der Emulgatoren. Die Scherbenbildung auf den Formwerkstoff-Proben verkürzt sich mit steigender Schlickertemperatur bei 40 bis 50 °C ferner um bis zu 20 %.

Der einfache Orientierungstest demonstriert das Verhalten der gehärteten Formwerkstoffproben bei der Scherbenbildung und gibt Hinweise, unter welchen Bedingungen und in welchem Zeitbereich die Scherbenbildung erfolgt, und in welchem Viskositätsbereich der Emulsion die jeweils gewünschte Scherbenbildung erhalten wird.

Die Einstellung kann weitgehend reproduzierbar über die Komponenten der Emulsion vorgenommen werden, soweit für die Emulsionsbereitung Temperatur und Rührintensität beibehalten werden.

In den folgenden Beispielen werden durch Zusätze zur Emulsion Formwerkstoffe mit beschleunigter Scherbenbildung und Scherbentrocknung erzielt. Auffallend ist, daß der oben gezeigte Einfluß der Viskosität der Emulsion auf die Scherbenbildung deutlich gegenüber dem Effekt zurücktritt, der durch die Zugabe der vorgenannten Zusätze erreicht wird, wie oben erwähnt. Dies steht wahrscheinlich eng im Zusammenhang mit der Feinverteilung des Wassers in der Emulsion, die weiter gesteigert wird, wenn, wie schon erwähnt, geringe Mengen Detergentien zugesetzt werden. Die damit gleichzeitig geförderte Hydrophilisierung erscheint von geringer Bedeutung.

In den Beispielen 3 bis 7 sind den Emulsionen steigende Mengen der zu beschleunigter Scherbenbildung führenden Zusätze zugesetzt. Diese können mit dem Harz oder dem Wasser, ferner als heiße Lösung (60 bis 70 °C) oder auch direkt in die Emulsion eingebracht werden. Dabei ist darauf zu achten, daß die Emulsion, die auf Zusätze mit Viskositätsanstieg reagiert, nicht durch Phasenwechsel zerfällt. Die Emulsion wird in Plattenform gegossen; die erhaltenen

Proben werden nach Trocknung auf ihre Scherbenbildung geprüft. Auf die Proben wird jeweils ein Kunststoffrohr aufgesetzt (z.B. PVC-Rohr, Höhe 6 cm, lichte Weite 4,5 cm). Das Rohr wird mit Vaseline isoliert und mit einem Schlicker (Wassergehalt 25 bis 30 %, Temperatur 20 °C) aufgefüllt.

Nach einer Füllstandzeit des Schlickers in der Form von 30 und 60 Minuten, bzw. für Porzellanschlicker 8 und 16 Minuten, wird der flüssige Anteil abgegossen. Nach weiteren 10 bis 20 Minuten wird das Rohrteil entfernt; der Scherben wird nachgetrocknet, gelöst und bis zur Massenkonstanz bei Raumtemperatur von 20 bis 25 °C getrocknet. In gleicher Weise wird mit einer kleinen entsprechenden Gipsplatte ein Kontrollversuch durchgeführt. Die Masse der trockenen Scherben wird ermittelt und mit dem auf Gips erhaltenen Scherben (gleich 100 %) verglichen.

Die erfindungsgemäß verwendeten Formwerkstoffe ergeben eine beträchtliche Beschleunigung der Scherbenbildung, die im übrigen für alle keramischen Werkstoffe zutrifft. Die Scherbenbildungszeit ändert sich je nach Art des keramischen Werkstoffes, wie dies von der Formgebung mit Gips bereits bekannt ist.

In Tabelle 4 sind experimentelle Werte für die Formwerkstoffe der Beispiele 3 bis 5 sowie von Beispielen 12 und 13 aufgeführt die mit einer geringeren Menge Wasser in der verwendeten Emulsion, bei sonst gleicher Rezeptur, erhalten waren.

## TABELLE 4

### SCHERBENBILDUNG IM VERGLEICH MIT GIPS

| Schlicker: | Sanitärkeramik | | | | Feinfeuerton | | | | Feuerton | | | |
|---|---|---|---|---|---|---|---|---|---|---|---|---|
| Verweilzeit (min): | 30 | | 60 | | 30 | | 60 | | 30 | | 60 | |
| Trockenmasse: | g | % | g | % | g | % | g | % | g | % | g | % |
| Gips | 22,1 = 100% | | 29,4 = 100% | | 18,9 = 100% | | 24,0 = 100% | | 22,5 = 100% | | 28,5 = 100% | |
| Beispiel 3 | 23,9 | + 8,1 | 33,6 | +14,3 | 18,7 | − 1,0 | 26,1 | + 8,7 | 23,8 | + 5,7 | 24,6 | −13,6 |
| Beispiel 4 | 27,6 | +24,8 | 36,9 | +25,9 | 22,0 | + 5,8 | 28,0 | +16,6 | | | 29,2 | + 2,4 |
| Beispiel 5 | 27,9 | +26,2 | 39,5 | +34,4 | 20,0 | +16,4 | 30,8 | +28,3 | 27,4 | +21,3 | 28,5 | +/− 0 |
| Beispiel 12 | | | 23,2 | −21,1 | 15,8 | −16,4 | 21,8 | − 9,1 | | | 23,3 | −18,0 |
| Beispiel 13 | 22,2 | +/− 0 | 28,8 | − 2,0 | | | | | | | | |

| Schlicker: | Porzellan | | | |
|---|---|---|---|---|
| Verweilzeit (min): | 8 | | 16 | |
| Trockenmasse: | g | % | g | % |
| Gips | 10,3 = 100 % | | 12,6 = 100 % | |
| Beispiel 3 | 12,6 | + 22,3 | 21,23 | + 36,3 |
| Beispiel 4 | 14,8 | + 44,0 | 20,0 | + 58,7 |

Die zum Vergleich verwendeten Kunststoffproben enthielten in der zur Herstellung verwendeten Emulsion, bezogen auf 100 Masseteile härtbaren Anteil,

| Probe | Wasser (Masseteile) | Zusatz zur Scherbenbildungsbeschleunigung (Masseteile) |
|---|---|---|
| Beispiel 3 | 100 | 4 |
| Beispiel 4 | 100 | 6 |
| Beispiel 5 | 100 | 8 |
| Beispiel 12 | 50 | 0 |
| Beispiel 13 | 50 | 8 |

EP 0 165 952 B1

Tabelle 4 zeigt eindeutig die beträchtliche Beschleunigung der Scherbenbildung gegenüber Gips, die im übrigen für alle verwendeten keramischen Werkstoffe zutrifft. Die Scherbenbildungszeit ändert sich je nach Art des keramischen Werkstoffes, wie dies von der Formgebung mit Gips bereits bekannt ist.

Auch die Verfestigung der Scherben läuft in kürzeren Zeiten als bei Gips ab, insbesondere bei Scherbenstärken z.B. von 6 bis 8 mm, oder nach mehreren aufeinanderfolgenden Abformungen. Die poröse Kunststofform entwässert den Scherben um bis zu 30 % mehr als Gips. Das in der Form zur Verfügung stehende, fast doppelte Porenvolumen gegenüber Gips kann voll genutzt werden.

Die Ablösung des Scherbens ist verzögert. Der Ablösungszeitpunkt läßt sich jedoch durch kurzzeitiges Erhitzen auf Temperaturen über 50 °C regulieren. Wird wie vorerwähnt die Kunststofform mit Gipsspray behandelt, so lösen sich bei Gips- und Kunststofformen die Scherben zur gleichen Zeit ab.

Mit einer Form aus erfindungsgemäß verwendetem Formwerkstoff wurden bis zu 375 Abformungen vorgenommen, ohne daß sich an der Oberfläche der Form oder an dem Scherben bzw. in der Funktion eine Veränderung wahrnehmen ließ. Bei diesen Versuchen wurden an der gleichen Stelle der Form ohne Unterbrechung und Formtrocknung 15 bis 16 Abformungen hintereinander vorgenommen.

Die Scherbenbildung kann, wie an sich bekannt ist, durch Erhöhen der Temperatur des Schlickers ebenfalls beschleunigt werden. Während bei Gipsformen die Temperaturerhöhung zu einer rascheren Schädigung der Form führt, kann bei den Kunststofformen die Schlickertemperatur ohne weiteres auf über 60 °C gesteigert werden, falls dies gewünscht ist.

In den Beispielen 8, 9, 10 und 11 (vgl. Tabelle 2) ist ein Perlpolymerisat mit und ohne Verwendung von Netzmitteln eingesetzt. Der Wasseranteil bzw. auch das Porenvolumen wird dadurch reduziert und die mechanische Festigkeit angehoben. Die Scherbenbildungsgeschwindigkeit nimmt etwa um die Hälfte ab. Die Permeabilität für Gase und Wasser wird deutlich angehoben. Daraus hergestellte Filterplatten gleicher Dicke und gleicher Nutzfläche ergeben für gleichen Druck eine doppelte Passagegeschwindigkeit für gleiche Wassermengen. Wird der Netzmittelzusatz weiter erhöht, so kann die Permeabilität bis zum 10-fachen ansteigen; die Scherbenbildungsgeschwindigkeit ist dann gleich Null, die Saugfähigkeit nur für Wasser hervorragend (Steigfähigkeit von Wasser in 15 Minuten 30 cm), eine erfindungsgemäße Verwendbarkeit ist dann also nicht mehr gegeben. Einsetzbar sind solche Produkte für den Druckguß bei Anwendung hoher Drücke von 10 bis 50 bar. Damit wird gleichzeitig die Abgrenzung gegenüber bereits bekannten Verfahren deutlich.

Als Materialien für Einrichtungen zur Herstellung von Formkörpern aus den Formwerkstoffen kommen Metalle wie Aluminium, Zink, niedrigschmelzende Legierungen (Schmelzpunkt zwischen 120 und 200 °C), die z.B. auch im Spritzverfahren zur Herstellung von Formen verwendet werden, Stahl, jedoch keine Buntmetalle, Kunststoffe wie Polypropylen, Polyethylen, Epoxidharze, Polyurethangießharze u. dgl. in Frage.

## Beispiel 14

Das Beispiel bezieht sich auf die Scherbenbildung mit einer sanitärkeramischen Masse (Steingutschlicker) unter Verwendung einer Gießform aus dem Formwerkstoff von Beispiel 4 (vgl. Tabelle 2; 50 % Wasser, 6 % Zusatz zur Scherbenbildungsbeschleunigung). Nach der angegebenen Rezeptur wurde eine Gießform für eine Kanne von 0,5 Liter mit einer Formwandstärke von 3,5 cm hergestellt. Mit dieser Form werden dann im Vergleich mit einer Gipsform die folgenden Vergleichsversuche durchgeführt. Die in Tabelle 4 aufgeführten Ergebnisse zeigen, daß eine günstige Scherbenbildung in 30 Minuten erzielt wird.

## Tabelle 5

| Gießform | Gips | Kunststoff |
|---|---|---|
| Masse der Form (kg) | 3,8 | 1,2 |
| Formwandstärke (cm) | 6 | 3,5 |
| Schlickerdichte (kg/l) | 1,82 | 1,82 |
| Schlickertemperatur (°C) | 26 | 26 |
| Füllstandzeit (min) | 75 | 15 |
| Trocknungszeit i.d. Form (min) | 120 | 30 |
| Trocknungstemperatur (°C) | 35 | 25 |
| Scherbendicke (mm) | 5-6 | 6 |
| Zykluszeit (min) | 195 | 45 |
| Eingüsse/Tag | 2 | 6-8 |

Die Zykluszeit ist erfindungsgemäß gegenüber Gips um 70 % verkürzt. Ähnliche Ergebnisse lassen sich auch mit weitaus größeren Formen, z.B. aus dem Sanitärbereich, und mit anderen Schlickertypen unter Berücksichtigung der damit vorgegebenen Scherbenbildungszeitverlängerung bzw. -verkürzung, z.B. bei Porzellan, erzielen. Neben der kleineren Masse, die bei Transport und Lagerung der Kunststofformen eine besondere Rolle spielen, ergeben sich aus der möglichen mehrfachen täglichen Abformung und der längeren Lebensdauer völlig neue betriebstechnische Perspektiven.

Eine beträchtliche Ausweitung der keramischen Formtechnik wird nach der Erfindung insbesondere mit dem Niederdruckverfahren erreicht.

Beispiel 15

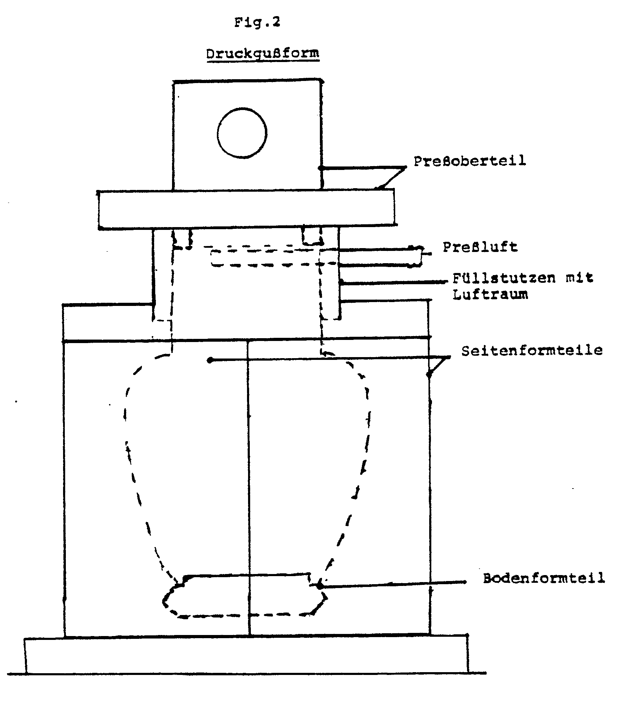

Eine dreiteilige Gießform (Boden und zwei Seitenteile) aus dem erfindungsgemäß verwendeten Formwerkstoff wird zu den Versuchen verwendet, die mit zwei den Gießformkörper umfassenden Zurrgurten zusammengehalten wird. Die Gießform ist in Fig. 2 dargestellt. Auf den Einguß wird ein Füllstutzen aufgesetzt, der mit dem Eingußrand der Form dicht abschließt und über dem Spiegel des Schlickers einen Luftraum bildet, der bei diesem Versuch mit einer Preßluftleitung verbunden ist. Die Form wird mit Schlicker aufgefüllt; der Füllstutzen wird durch Druck mit einer kleinen hydraulischen Presse abgedichtet. Die Form wird dann mit Preßluft 6 min unter einem Druck von 1 bar gesetzt. Nach 6 min wird die Preßluft abgelassen, die Form geöffnet, der Schlicker abgegossen (der auch durch zusätzliches Einführen eines Absaugrohres in die Form abgesaugt werden kann); die Form wird wiederum mit Preßluft unter einen Druck von 2 bis 3 bar gesetzt; anschließend wird die geschlossene oder geöffnete Form 2-3 min mit Warmluft von 50 °C bespült. Danach kann entformt werden, und die Formgebung kann von neuem beginnen. Der Formzyklus wird damit auf 12 bis 15 min herabgesetzt. Die zusätzliche Anwendung von Druck ersetzt teilweise die Saugkraft der Form. Es ist deswegen möglich, ohne Rücksicht auf das Porenvolumen eine fast beliebige Anzahl Zyklen nacheinander ablaufen zu lassen. Nachdem einerseits mit der Anwendung von niedrigem Druck die Formoberfläche wenig beansprucht wird und andererseits durch die Mithilfe des Drucks bei der Scherbenbildung auch Formmassen mit einem niedrigen Porenvolumen verwendet werden können, ergibt sich eine beträchtliche Lebensdauer der Formen. Je nach Art des Schlickers können 300 bis einige Tausend Abformungen vorgenommen werden. Die Anwendung von niedrigem Druck hat jedoch noch weitere Vorteile. Die Ausstattung der Form ist von der einer normalen Gießform kaum zu unterscheiden. Der maschinelle Aufwand wird auf ein Minimum reduziert. Der Vorgang läßt sich ebenso im Handbetrieb wie mit einer automatisierten Kleinanlage durchführen. Mit einem kleinen Rundläufer kann unter den oben angegebenen Bedingungen mit 6 Gießformen eine tägliche Leistung von bis zu etwa 200 Rohlingen erreicht werden.

Die wichtigsten Merkmale der Erfindung werden im folgenden nochmals kurz zusammengefaßt:

1. Zur Herstellung keramischer Scherben werden Formen zur Durchführung der üblichen Verfahren wie z.B. Gießen mit und ohne Druck als Voll- oder Hohlguß oder in kombinierter Form, Drehen und Pressen von Sanitärteilen, Geschirr, Zier-, Bau- und technischer Keramik verwendet, die aus anspruchsgemäß spezifizierten Formwerkstoffen bestehen. Diese Formwerkstoffe besitzen ein überwiegend offenes Porenvolumen, das mit Wasser wieder auffüllbar ist und sind durch folgende Maßnahmen zur Bildung eines Scherbens im Kontakt mit keramischen Massen befähigt:

a) Einstellen des Dispersionsgrades der Emulsion,

b) Einstellung des Porenvolumens über den Wassergehalt der Emulsion

c) gegebenenfalls durch Zusätze, die der Beschleunigung und Regulierung der Scherbenbildung dienen. Die Maßnahme nach b) ist jeweils dem Verwendungszweck anzupassen. Im Minimum soll das offene Porenvolumen 10 % des gesamten Formwerk stoffvolumens nicht unterschreiten, während die obere Grenze des Gesamtporenvolumens bei etwa 60 % liegt.

2. Maßnahmen zu einer erheblichen Verkürzung der Formstandzeit unter weitgehender Schonung der Formen sind:

a) Anwendung eines Niederdruckverfahrens, bei dem der Schlicker in der Form zur Scherbenbildung einem niedrigeren Druck bis etwa 3 bar ausgesetzt wird, bis die gewünschte Scherbendicke erreicht ist,

b) kurzzeitigen Preßluftdruck auf den gebildeten Scherben bis etwa 5 bar nach Entfernen des flüssigen Schlickeranteils zur Beschleunigung der Trocknung,

c) gleichzeitige oder nachfolgende kurze Einwirkung mit eingeblasener Warmluft oder durch Wärmestrahlung auf den gebildeten Scherben bis zur Ablösung. Diese Maßnahmen können jeweils für sich oder kombiniert bei der Herstellung von Hohlgußteilen zur Verkürzung der Formstandzeit angewandt werden.

3. Das Ablösen des gebildeten Scherbens aus der Form kann durch folgende Maßnahmen zusätzlich beschleunigt werden:

a) Behandlung der Formoberfläche mit einem Spray, der abgebundenen Gips in Suspension oder als Trockenpulver enthält,

b) kurzes Erwärmen von im Hohlguß gebildeten Scherben.

Die Vorteile der Formgebung keramischer Werkstoffe nach der Erfindung sind folgende: Die Masse der Formen reduziert sich auf 70 bis 25 % der Masse gleicher Formen aus Gips. Der Formwerkstoff ist ähnlich wie Holz zu bearbeiten und bietet daher für Konstruktion und Ausbau der Formen besondere Erleichterungen und neue Möglichkeiten.

Die Formwandstärken sollten gleichmäßig sein und können im allgemeinen etwa die Hälfte der bei Gipsformen üblichen Wandstärken betragen; die Formmaße verringern sich damit.

Füllstandzeit und Trocknungszeit des Scherbens in der Form betragen beim Gießverfahren nach der Erfindung einen Bruchteil der normalerweise aufgewendeten Zeit. Die Anzahl der täglichen Abformungen kann dadurch vervielfacht werden, insbesondere, wenn nach dem beschriebenen Niederdruckverfahren gearbeitet wird und dazu Mehrfach- bzw. Batterieformen verwendet werden.

Mit der erhöhten Lebensdauer von Gieß- und Drehformen werden Material und Raum in erheblichem Umfang eingespart und auch der sonstige Aufwand verringert.

## Ansprüche

1. Verwendung von porösen, offenporigen, wasserabsorbierenden gehärteten Formwerkstoffen aus Kunststoff anstelle von Gips, mit einem mit Wasser auffüllbaren Porenvolumen von mindestens 10 %, die eine solche kapillare Saugkraft besitzen, daß im Kontakt mit einer flüssigen keramischen Formmasse mit einem Wassergehalt von etwa 25 bis 30 Volum-% bereits drucklos ein vom Formwerkstoff abnehmbarer Scherben gebildet wird, und die hergestellt sind durch

(A) Herstellung einer Wasser-in-Öl-Emulsion mit einer Ölphase aus einem oder mehreren flüssigen polymerisierbaren Monomeren unter Verwendung von Emulgatoren und eines dem angestrebten Porenvolumen entsprechenden Wassergehalts;

(B) Erhöhung des Dispersionsgrades der Wasserphase der Wasser-in-Öl-Emulsion durch Mischen unter Einstellung der Viskosität auf einen Wert im Bereich von 1660 bis 5000 cP,

(C) Polymerisation der Ölphase der Wasser-in-Öl-Emulsion in Gegenwart eines Polymerisationsinitiators in einer Form

und gegebenenfalls

(D) Entfernen des Wassers aus dem erhaltenen Formwerkstoff,

zur Herstellung keramischer Scherben,

wobei die Scherbenbildungsgeschwindigkeit umso höher ist, je höher die bei der Herstellung des Formwerkstoffs in Schritt B eingestellte Viskosität der Emulsion war.

2. Verwendung von Formwerkstoffen nach Anspruch 1, die aus einer W/O-Emulsion mit einer Ölphase hergestellt sind, in der ein Polyesterharz oder ein flüssiges Präpolymerisat aus überwiegend Methylmethacrylat in einer Menge von 40 bis 70 Masse-% gelöst wurde.

3. Verwendung von Formwerkstoffen nach den Ansprüchen 1 und 2, die aus einer W/O-Emulsion hergestellt sind, die Calciumsulfatdihydrat, Natriumdisilicat und/oder Dinatriumtetraborat enthielt.

4. Verwendung von Formwerkstoffen nach Anspruch 3, die aus einer W/O-Emulsion hergestellt sind, die Calciumsulfatdihydrat, Natriumdisilicat und/oder Dinatriumtetraborat in einer Menge von etwa 2 bis etwa 12 Masse-%, bezogen auf die Masse des polymerisierbaren Anteils der Emulsion, enthielt.

5. Verwendung von Formwerkstoffen nach den Ansprüchen 1 bis 4, die mit Styrol, α-Methylstyrol, Phthalsäureallylester, Acrylsäureestern und/oder Methacrylsäureestern als polymerisierbare Monomere hergestellt sind.

6. Verwendung von Formwerkstoffen nach den Ansprüchen 1 bis 5, die mit Styrol und/oder Methylmethacrylat als polymerisierbare Monomere hergestellt sind.

7. Verwendung von Formwerkstoffen nach den Ansprüchen 1 bis 6, die unter Einsatz der flüssigen polymerisierbaren Monomeren in einer Menge von 30 bis 78 Masse-%, bezogen auf die Masse der Emulsion, hergestellt sind.

8. Verwendung von Formwerkstoffen nach den Ansprüchen 1 bis 7, die Füllstoffe enthalten.

9. Verwendung von Formwerkstoffen nach Anspruch 8, die mit pulverförmigen, in der Ölphase der Emulsion quellbaren Polymeren, Polymethylmethacrylat-Perlpolymerisaten, Mikroglaskugeln, Schwerspat und/oder Quarzmehl als Füllstoffe hergestellt sind.

10. Verwendung von Formwerkstoffen nach den Ansprüchen 1 bis 9, die durch Aufbringen wäßriger Kunstharzlösungen oberflächenbeschichtet sind.

11. Verwendung von Formwerkstoffen nach den Ansprüchen 1 bis 10, die durch Aufbringen von Melamin-Harnstoff-Formaldehyd-Harzen, Epoxyharzen oder filmbildenden Kunststoffdispersionen oberflächenbeschichtet sind.

12. Verwendung von Formwerkstoffen nach den Ansprüchen 1 bis 11, dadurch gekennzeichnet, daß die in die Form gefüllte Formmasse bzw. die nach dem Entleeren in der Form verbliebene Formmasse mit einem Überdruck von bis zu 5 bar beaufschlagt wird.

13. Verwendung von Formwerkstoffen nach den Ansprüchen 1 bis 12, dadurch gekennzeichnet, daß vor dem Eingießen der Formmasse Gipspulver oder eine wäßrige Gipssuspension mit einem Gipsgehalt von mindestens 1 Masse-% auf die Form aufgebracht werden.

14. Verwendung von Formwerkstoffen nach den Ansprüchen 1 bis 13, die hergestellt sind aus einer verarbeitungsfähigen Zusammensetzung aus

(I) einem Styrol enthaltenden Polyestergießharz, das neben Styrol copolymerisierbare Acrylate und/oder Methacrylate enthält, oder einem flüssigen Präpolymerisat aus überwiegend Methylmethacrylat;

(II) zur Bildung einer W/O-Emulsion erforderlichen Emulgatoren und ggfs. grenzflächenaktiven Stoffen und

(III) Calciumsulfatdihydrat, Natriumdisilicat und/oder Dinatriumtetraborat in einer Menge von 2 bis 12 Masse-%, bezogen auf die Masse von Komponente I.

## Claims

1. Use of porous, open-pored, water-absorbing, hardened form materials of plastic in place of plaster, having a pore volume which is refillable with water of at least 10 %, which possess a capillary suction force such that when in contact with a fluid ceramic compound having a water content of approximately 25 to 30 % by volume, a body that is removable from the mold material is formed in a pressureless manner, and which are made as follows

(A) Production of a water-in-oil emulsion with an oil phase consisting of one or several liquid polymerizable monomers using emulsifiers and a water content corresponding to the desired pore volume;

(B) Increasing the degree of dispersion of the water phase of the water-in-oil emulsion by mixing and at the same time adjusting the viscosity to a value in the range of between 1600 and 5000 cP,

(C) Polymerization of the oil phase of the water-in-oil emulsion in the presence of a polymerization initiator in a mold

and if necessary

(D) Removal of the water from the form material thus obtained

far producing ceramic bodies,

whereby the rate of body formation is faster, the higher the viscosity of the emulsion that was adjusted when making the form material in step B.

2. Use of form materials as defined by Claim 1, which are made from a W/O emulsion with an oil phase in which a polyester resin or a liquid prepolymerizate consisting mainly of methyl methacrylate in a quantity of 40 to 70 % by weight has been dissolved.

3. Use of form materials as defined by Claims 1 and 2, which are made from a W/O emulsion that contained calcium sulfate dihydrate, sodium disilicate and/or disodium tetraborate.

4. Use of form materials as defined by Claim 3, which are made from a W/O emulsion that contained calcium sulfate dihydrate, sodium disilicate and/or disodium tetraborate in a quantity of approximately 2 to approximately 12 % by weight in terms of the weight of the polymerizable portion of the emulsion.

5. Use of form materials as defined by Claims 1 thru 4 which are made with styrene, α-methyl styrene, phthalic acid allyl ester, esters of acrylic acid and/or esters of methacrylic acid as polymerizable monomers.

6. Use of form materials as defined by Claims 1 thru 5, which are made with styrene and/or methyl methacrylate as polymerizable monomers.

7. Use of form materials as defined by Claims 1 thru 6, which are made using the liquid polymerizable monomers in a quantity of 30 to 78 % by weight in terms of the weight of the emulsion.

8. Use of form materials as defined by Claims 1 thru 7 which contain fillers.

9. Use of form materials as defined by Claim 8, which are made with powdered polymers that are capable of swelling up in the oil phase of the emulsion, polymethyl methacrylate (bead polymerizates), microbeads of glass, barite and/or quartz powder as fillers.

10. Use of form materials as defined by Claims 1 thru 9, which are surface coated by applying aqueous synthetic resin solutions.

11. Use of form materials as defined by Claims 1 thru 10, which are surface coated by applying melamine-urea formaldehyde resins, epoxy resins or film-forming synthetic dispersions.

12. Use of form materials as defined by Claims 1 thru 11, characterized in that a pressure above atmospheric of up to 5 bar is applied to the (ceramic) molding compound that is filled into the mold, or to the (ceramic) molding compound that remained in the mold after emptying of the liquid portion.

13. Use of form materials as defined by Claims 1 thru 12, characterized in that before pouring the (ceramic)

EP 0 165 952 B1

molding compound into the mold, dry plaster or an aqueous plaster suspension having a plaster content of at least 1 % by weight is applied to the mold.

14. Use of form materials as defined by Claims 1 thru 13, which are made from a workable composition consisting of
(I) a polyester casting resin containing styrene, which besides styrene also contains copolymerizable acrylates and/or methacrylates, or of a liquid pre-polymerizate consisting mainly of methyl methacrylate;
(II) emulsifiers and if necessary surface-active agents required for formation of a W/O emulsion;
(III) Calcium sulfate dihydrate, sodium disilicate and/or disodium tetraborate in a quantity of 2 to 12 % by weight in terms of the weight of component I.

## Revendications

1. Utilisation de matériaux de formage poreux a pores ouvertes, absorbant l'eau, durcis, en matières plastique à la place de plâtre avec un volume de remplissage d'eau d'au moins 10%, possédant une force d'absorption capillaire telle qu'au contact d'une masse de formage céramique liquide contenant env. 25 à 30% de volume d'eau, on obtienne déjà, sans exercer de pression, un tesson détachable du matériau de formage et qui sont fabriqués par
   (A) réalisation d'une émulsion d'eau dans de l'huile avec une phase d'huile provenant d'un ou plusieurs monomères liquides polymérisables en utilisant des émulgateurs et une teneur en eau correspondant au volum de pores désiré;
   (B) augmentation du degré de dispersion de la phase eau de l'émulsion eau dans l'huile en mélangeant, avec un réglage de la viscosité à une valeur se situant dans une étendue de 1600 à 5000 cp.
   (C) polymérisation de la phase d'huile de l'émulsion d'eau dans de l'huile en présence d'un excitateur de polymérisation dans une forme et,
   le cas échéant,
   (D) extraction de l'eau du matériau de formage obtenu, pour la fabrication de tessons céramiques.
   la formation de tessons étant d'autant plus élevée que la viscosité, réglée pour la fabrication du matériau de formage au cours du pas B, aura été plus élevée.

2. Utilisation de matériaux de formage suivant la revendication 1, qui sont fabriqués à partir d'une émulsion e/h (eau/huile) avec une seule phase d'huile, dans laquelle a été dissoute une résine polyester ou un pré-polymère liquide comprenant principalement du méthacrylate méthylique dans une proportion de 40 à 70% de masse.

3. Utilisation de matériaux de formage suivant les revendications 1 et 2, fabriqués à partir d'une émulsion e/h contenant du dihydrate de sulfate de calcium, du silicate de sodium et/ou du disodium de tétraborate disodique.

4. Utilisation de matériaux de formage suivant la revendication 3, fabriqués à partir d'une émulsion e/h contenant du dihydrate de sulfate de calcium, du disilicate de sodium e/ou du tétraborate disodique dans une quantité d'env. 2 à 12% de la masse par rapport à la masse de la part polymérisable de l'émulsion.

5. Utilisation de matériaux de formage suivant les revendications 1 à 4, fabriqués a partir de styrène, -styrène méthylique, esters d'acide phtalique, esters d'acide acrylique, d'esters d'acides méthacrylique comme monomères polymérisables.

6. Utilisation de matériaux de formage suivant les revendications 1 à 5, fabriqués avec du styrène et/ou du méthacrylate méthylique comme monomères polymérisable.

7. Utilisation de matériaux de formage suivant les revendications 1 à 6 qui sont fabriqués en employant les monères polymérisables en une quantité de 30 à 78 de pourcentage de la masse, par rapport à la masse de l'émulsion.

17

8. Utilisation de matériaux de formage suivant les revendications 1 à 7, qui contiennent des charges.

9. Utilisation de matériaux de formage suivant la revendica-8 qui sont fabriqués avec des polymères, des polymérisats en perles de méthacrylates polyméthyliques, microbilles en verre, de baryte et/ou de la poudre de quartz comme charges sous forme de poudres.

10. Utilisation de matériaux de formage suivant les revendications 1 à 9, qui par suite d'application de solutions acqueuses de résines synthétiques sont revêtus d'une couche superficielle.

11. Utilisation de matériaux de formage suivant les revendications 1 à 10, qui, par suite d'application de résines mélamine urée formaldéhydes, résines époxyde ou des dispersions synthétiques formant film, sont revêtus d'une couche superficielle.

12. Utilisation de matériaux de formage suivant les revendications 1 à 11, caractérisé par le fait que la masse de formage introduite dans la forme, ou encore, la masse de formage restant dans la forme après vidange, est soumise à une pression de 5 bar.

13. Utilisation de matériaux de formage suivant les revendications 1 à 12, caractérisé par le fait qu'avant de verser la masse de formage dans la forme, on applique sur la forme de la poudre de plâtre ou une suspension acqueuse de plâtre d'une teneur en plâtre d'au moins 1% de masse.

14. Utilisation de matériaux de formage suivant les revendications 1 à 13, qui sont fabriqués a partir d'une composition susceptibles d'être usinée comprenant
(I) une résine de moulage polyester, contenant, à côté des styrènes acrylates copolymérisables et/ou des méthacrylates, ou un pré-polymère liquide contenant principalement du méthylacrylate méthylique;
(II) les émulgateurs pour la formation d'une émulsion e/h et, le cas échéant, des produits actifs dans les surfaces limites et
(III) du dihydrate de sulfate de calcium, du disilicate de sodium et/ou du tétraborate disodique en une quantité de 2 à 12% de la masse, par rapport à la masse de la composante I.

Fig. 1

SCHERBEN

A Minimal – Werte ohne Zusatz

B Gips

C Maximal – Werte mit Zusatz

Beschichtete Fläche 16 cm$^2$

Fig.2

<u>Druckgußform</u>

Preßoberteil

Preßluft

Füllstutzen mit
Luftraum

Seitenformteile

Bodenformteil